# EUROPEAN PATENT APPLICATION

(11) **EP 1 767 969 A1**
(43) Date of publication of application: **28.03.2007**
(21) Application number: 06008453.0
(22) Date of filing: 24.04.2006
(51) Int. Cl.: G02B 6/12, G01N 21/39

(54) **Conducting cavity sensor**

(30) Priority: 26.09.2005 US 236044
(71) Applicant: Agilent Technologies, Inc., Santa Clara, CA 95051 (US)
(72) Inventor: Sigalas, Mihail M., P.O. Box 7599 Loveland CO 80537-0599 (US); Ranganath, Tirumala R., P.O. Box 7599 Loveland CO 80537-0599 (US)
(74) Representative: Schoppe, Fritz

(57) **Abstract**

A concentration of particles or a single particle may be detected using a conducting cavity sensor. The conducting cavity sensor includes a two dimensional periodic lattice (199) of conducting rods (120) surrounded by a dielectric medium with a defect (128) in the periodic lattice serving as the sensing volume.

## Description

### Background

Structures that localize electromagnetic radiation on sub-wavelength dimensions can be used as sensors. For example, as disclosed in U.S. Patent Ser. No. 10/799,020 entitled "Photonic Crystal Sensors" and "Apparatus for Single Particle Detection", U. S. Patent Ser. No 11/078,785 and incorporated by reference herein in their entirety, a dielectric photonic crystal may be used to localize light and function as a sensor.

### Summary

In accordance with the invention, a concentration of particles or a single particle may be detected using a conducting cavity sensor. The conducting cavity sensor includes a two dimensional periodic lattice of conducting rods surrounded by a dielectric medium with a defect in the periodic lattice serving as the sensing volume.

### Brief Description of the Drawings

FIG. 1a shows an embodiment in accordance with the invention.
FIG. 1b shows a cross-section of the embodiment in FIG. 1a.
FIG. 1c shows an embodiment in accordance with the invention.
FIG. 2a shows transmission versus frequency curves for embodiments in accordance with the invention.
FIG. 2b shows transmission versus frequency curves for embodiments in accordance with the invention.
FIG. 2c shows transmission versus frequency curves for embodiments in accordance with the invention.
FIG. 3 shows multiple conducting cavity sensor structures in accordance with the invention.
FIG. 4 shows an embodiment in accordance with the invention.
FIGs. 5a-c show steps for making an embodiment in accordance with the invention.

### Detailed Description

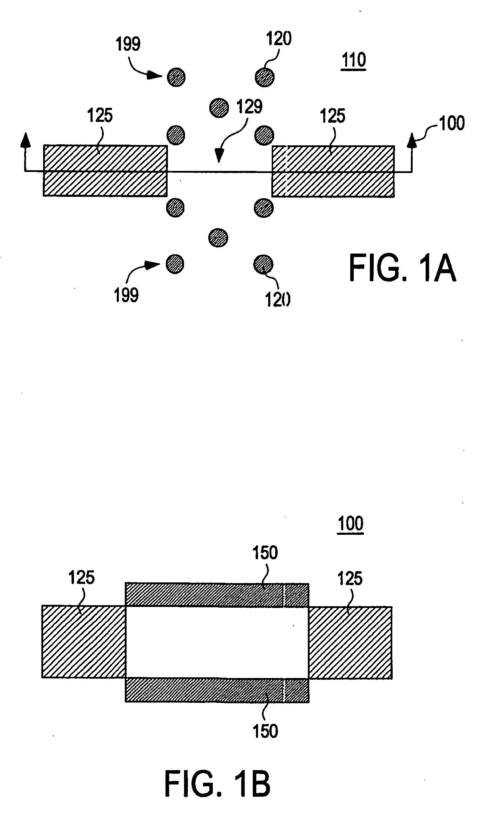

In an embodiment in accordance with the invention, FIG. 1a shows a top view of conducting cavity sensor structure 110 with defect region 129 and FIG. 1b shows cross-section 100 of conducting cavity sensor structure 110. Conducting cavity sensor structure 110 includes conducting rods 120 surrounded by a dielectric medium to form square two dimensional periodic lattice 199 having a lattice constant *a* and pair of conducting layers 150. Two dimensional periodic lattice 199 shown in FIG. 1a has square symmetry but triangular symmetry or any other suitable symmetry in accordance with the invention may also be used. Note that the embodiments in accordance with the invention scale with the lattice constant *a.* Conducting layers 150 have a typical thickness of about 0.25a and cover square two dimensional periodic lattice 199 on both the top and bottom as shown in FIG. 1b. A typical radius r for conducting rods 120 is about 0.34*a* with a typical length of about 0.5*a* in an embodiment in accordance with the invention. Electromagnetic radiation, typically from a suitably tunable optical source (not shown), is coupled in and out of conducting cavity sensor structure 110 using dielectric waveguides 125. Dielectric waveguides 125 may be tapered to improve coupling to conducting cavity sensor structure 110. Dielectric waveguides 125 have a typical refractive index of *n*_{w} equal to about 2, a typical width about equal to lattice constant *a* and a typical thickness of about 0.5*a*. Electromagnetic radiation at a wavelength λ, typically at optical wavelengths is coupled into square two dimensional periodic lattice 199 along the 1 1 direction by waveguide 125. Perfect conductivity is assumed for the conductors in all calculations. This is approximately correct for conductors such as gold, silver and aluminum at infrared wavelengths of around 1550 nm. In the visible, however, only aluminum and silver approximate perfect conductors.

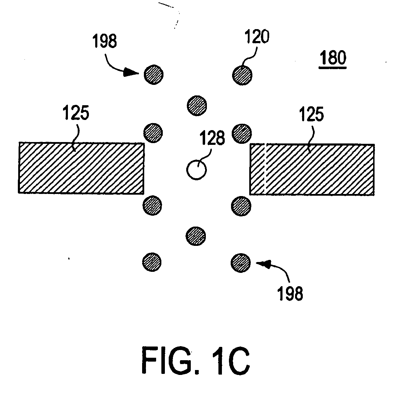

FIG. 1c shows conducting cavity sensor structure 180 and is useful for understanding the theory behind the conducting cavity sensor in accordance with the invention. Conducting rods 120 have a radius of 0.28*a* and a length of 0.5*a* in FIG. 1c. Electromagnetic radiation is coupled in and out of conducting cavity sensor structure 180 along the 11 direction of square two dimensional periodic lattice 198 using dielectric waveguides 125. Dielectric waveguides 125 have a typical refractive index of *n*_{w} equal to about 2, a typical width of about *a* and a typical thickness of about 0.5a. Conducting rods 120 are taken to be surrounded by a dielectric medium having a refractive index *n_{c}* equal to about 1.4.

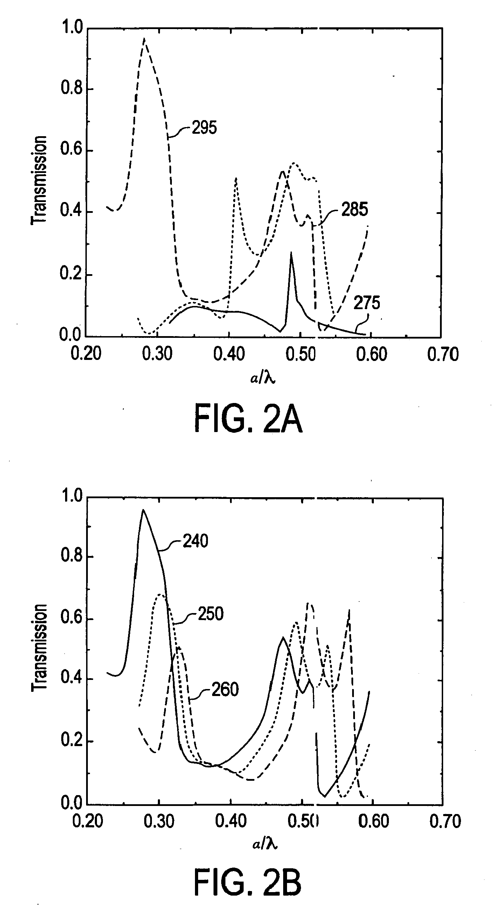

Conducting rod 128 in conducting cavity sensor structure 180 may be modified in radius or totally removed to create defect region 129 (see FIG. 1a) in accordance with the invention. Curve 275 in FIG. 2a shows the unperturbed case for transmission versus frequency where conducting rod 128 has the same radius as conducting rods 120 with a cut-off at *a*/λ of about 0.49. The photonic bandgap (no allowed states) extends from an *a*/λ equal to about zero to the cut-off *a*/λ of about 0.49. The effect on transmission versus frequency of reducing the radius of conducting rod 128 to about 0.1*a* is shown by curve 285. The defect state appears below the cut-off of 0.49 *a*/λ at an *a*/λ of about 0.41. The effect of totally removing conducting rod 128 on transmission versus frequency and creating defect region 129 is shown by curve 295 and moves the defect state lower to *a*/λ of about 0.28.

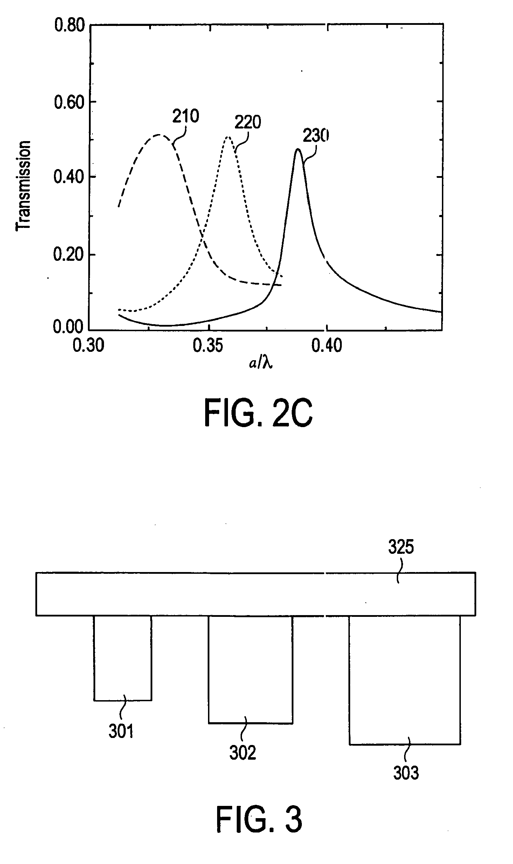

FIG. 2b shows the effect of increasing the radius of rods 120 in FIG. 1a. Curves 240, 250 and 260 in FIG. 2c correspond to conducting rods 120 having radii of 0.28*a*, 0.31*a* and 0.34*a*, respectively, with a length of 0.5*a*. Electromagnetic radiation is coupled in and out of conducting cavity sensor structure 110 along the 1 1 direction of square two dimensional periodic lattice 199 using dielectric waveguides 125 having a typical refractive index of *n*_{w} equal to about 2, a typical width of about *a* and a typical thickness of about 0.5*a*. Conducting rods 120 are surrounded by a dielectric medium having refractive index *n*_{c} equal to about 1.4. Curves 240, 250 and 260 show that as the radius of conducting rods 120 is increased the defect peak moves from an *a*/λ of about 0.29 for curve 240 to an *a*/λ of about 0.33 for curve 260. Similarly, the cut-off frequency moves from an *a*/λ of about 0.50 for curve 240 to an *a*/λ of about 0.55.

FIG. 2c shows electromagnetic transmission along conducting cavity sensor structure 110. Resonances 210, 220 and 230 in FIG. 2c appear at an *a*/λ equal to about 0.388, about 0.359 and about 0.330 for the dielectric medium refractive index *n_{c}* equal to about 1.2, about 1.3 and about 1.4, respectively. This results in a value for the sensitivity measure (Δλ / λ₀)/Δ*n_{c}* of about 0.77. The quality factor Q of conducting cavity sensor structure 110 is about 33, about 19 and about 10 for *n_{c}* equal to about 1.2, about 1.3 and about 1.4, respectively, where *n_{c}* is the refractive index of the cavity of conducting cavity sensor structure 110. Increasing the refractive index of the cavity of conducting cavity sensor structure 110 increases the leakage to dielectric waveguides 125 and acts to reduce the Q. Because poor coupling reduces the leakage and leads to a higher Q, Si may be used as the material for dielectric waveguides 125. In comparison with a dielectric photonic crystal as described in U.S. Patent Ser. No. 10/799,02 and U.S. Patent Ser. No 11/078,785, referenced and incorporated above, conducting cavity sensor structure 110 in accordance with the invention provides a higher sensitivity measure than the dielectric photonic crystal but losses in the conductor typically result in a reduction in Q factors from those available in dielectric photonic crystals.

FIG. 3 shows multiple conducting cavity sensor structures 301, 302 and 303 placed in line and evanescently coupled to waveguide 325. Evanescent coupling allows the electromagnetic radiation to be distributed unimpeded to conducting cavity sensor structures 301, 302 and 303. Each one of conducting cavity sensor structures 301, 302 and 303 typically operate at a different resonant frequency and can be used to detect different particles or molecules.

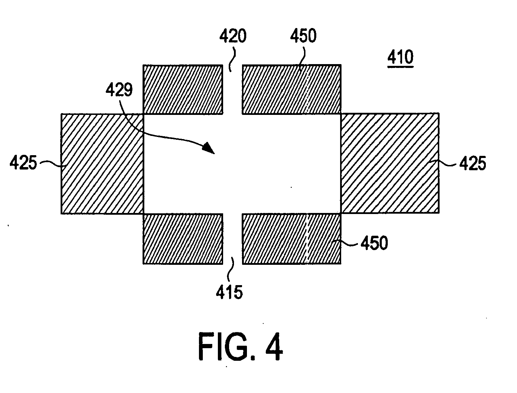

FIG. 4 shows conducting cavity sensor structure 410 in accordance with the invention in cross-section. Waveguides 425 couple electromagnetic radiation in and out of conducting cavity sensor structure 410 while holes 415 and 420 in conducting plates 450 allow passage of materials to be probed through conducting cavity sensor structure 410. For example, introduction of the material to be probed occurs through hole 415 into defect region 429 and modifies the resonance. The concentration of particles in a particular solution may be determined if the refractive index of the particles is known. Similarly, the presence of an introduced small particle such as protein molecule in defect region 429 may be determined by the shift in resonance, typically the fundamental resonance, if the refractive index of the small particle is known.

For example, assume that the shift in the resonant wavelength for a resonance at *a*/λ = 0.38 is Δλ = 1 nm, that the sensitivity (Δλlλ₀) / Δ*n_{c}* = 0.774 and that conducting cavity sensor structure 110 uses water with a refractive index *n_{w}* = 1.32 as the dielectric medium. Then a protein molecule with a refractive index *nₚ* =1.49 can be detected if the protein molecule has a nominal diameter of 120 nm or 50 nm for electromagnetic radiation introduced at an operating wavelength of 1550 nm or 440 nm, respectively. Clearly, shorter wavelengths allow detection of smaller particles, all else being equal.

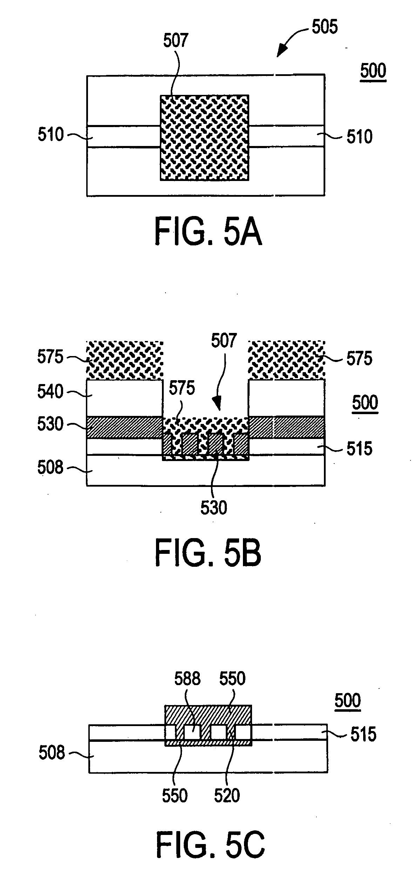

FIGs. 5a-5c show a sequence of steps to fabricate conducting cavity sensor structure 500 in accordance with the invention. FIG. 5a shows silicon on insulator wafer (SOI) 505 with Si layer 515 (see FIG. 5b) having a thickness of about 0.25 µm and SiO₂ layer 508 (see FIG. 5b)having a thickness in the range from about 1 µm to about 3 µm. Si-waveguide patterns 510 are typically defined on SOI wafer 505 by using an e-beam exposure step followed by transfer of the pattern into underlying silicon. Appropriate tapers may be applied to Si-waveguide patterns 510 as needed to efficiently get light in and out of conducting cavity sensor 500. Next a blanket Ti/Au evaporation is performed to cover SOI 505 wafer. Ti is deposited to a thickness of about 50 Å followed by deposition of gold to a thickness in the range from about 1000 Å to about 3000 Å. A masking step is then performed using a positive photo-resist that protects periodic lattice region 507 between waveguides 510. The exposed portion of the Ti/Au layer is then removed using standard etches. For example, Au may be removed with a compatible gold etchant such as AUROSTRIP® and Ti may be removed with an HF: H₂O mixture in the ratio of 100:1, respectively. Subsequently, electron resist layer 530 is applied to a thickness of about 1500 Å to about 4000 Å followed by about 3 µm thick image reversal photo-resist layer 540 (see FIG. 5b).

Using the same mask as used to define the first Ti/Au layer, the image reversal photo-resist layer is exposed and the image reversing bakeout is performed. A develop step is then performed that leads to two dimensional periodic lattice region 507 being free of any image-reversal photo-resist material (see FIG. 5b) and the exposure of the underlying electron resist layer. SOI wafer 505 is then loaded into an e-beam machine and the appropriate periodic metal pattern is exposed and developed to create the periodic lattice pattern in periodic lattice region 570. Then an about 50 Å thick Ti adhesion promotion layer (not shown) is typically deposited and is followed by the deposition of Au layer 575 to a thickness of about 0.5 µm as shown in FIG. 5b. Image reverse layer 540 is then dissolved lifting off Au layer 575 and Ti adhesion promotion layer (not shown) everywhere but periodic lattice region 570. Remaining electron resist layer 530 is then dissolved leaving air gaps 588 and results in conducting cavity sensor structure 500 shown in FIG. 5c with conducting rods 520 and conducting plates 550.

While the invention has been described in conjunction with specific embodiments, it is evident to those skilled in the art that many alternatives, modifications, and variations will be apparent in light of the foregoing description. Accordingly, the invention is intended to embrace all other such alternatives, modifications, and variations that fall within the spirit and scope of the appended claims.

## Claims

1. A conducting cavity sensor structure (110,180) comprising:
a dielectric waveguide (125,325, 425) for inputting electromagnetic radiation; and
a two dimensional periodic lattice (199) of conducting rods (120) surrounded by a dielectric medium, said two dimensional periodic lattice (199) of conducting rods (120) comprising a lattice constant and a defect region (129) and operable to receive said electromagnetic radiation from said dielectric waveguide (125,325, 425) and to confine said electromagnetic radiation in said defect region (129) at an operating wavelength.

2. The structure of Claim 1 further comprising a pair of conducting layers (150, 450) covering two opposite faces of said two dimensional periodic lattice (199).

3. The structure of Claim 1 wherein said two dimensional periodic lattice (199) is a square lattice.

4. The structure of Claim 2 wherein one of said pair of conducting layers (450) comprises a hole (415).

5. The structure of Claim 1 wherein said conducting rods (120) are comprised of silver.

6. The structure of Claim 1 further comprising a tunable optical source coupled to said dielectric waveguide (125).

7. The structure of Claim 1 wherein said dielectric medium is water.

8. The structure of Claim 1 wherein said dielectric medium is air.

9. The structure as in Claim 1 wherein said dielectric waveguide (325) is evanescently coupled to said a two dimensional periodic lattice (199) of conducting rods (120) surrounded by said dielectric medium.

10. The structure as in Claim 1 wherein said dielectric waveguide (125) (325) (425) is comprised of silicon.

11. The structure of Claim 1 wherein a length of said conducting rods (120) is about half of said lattice constant.

12. The structure of Claim 1 wherein said dielectric waveguide (125) (325) (425) is tapered.

13. A plurality of conducting cavity sensor structures (301) (302) (303) evanescently coupled to a dielectric waveguide (325), each one of said plurality of conducting cavity sensor structures (301) (302) (303) comprising one of a plurality of two dimensional periodic lattices (199) of conducting rods (120) surrounded by a dielectric medium, each one of said plurality of two dimensional periodic lattices (199) of conducting rods (120) comprising a defect region (129).

14. The structure of Claim 13 wherein each one of said plurality of two dimensional periodic lattices (199) of conducting rods (120) has a different lattice constant.
